**Europäisches Patentamt**

**European Patent Office**

**Office européen des brevets**

(19)

(11) Publication number: **0 169 179**
**A1**

(12) # EUROPEAN PATENT APPLICATION

(21) Application number: **85830184.9**

(22) Date of filing: **17.07.85**

(51) Int. Cl.⁴: **H 01 M 2/02**

(30) Priority: **19.07.84 IT 2196984**

(43) Date of publication of application: **22.01.86**
**Bulletin 86/4**

(84) Designated Contracting States: **AT BE CH DE FR GB LI LU NL SE**

(71) Applicant: **ACCUMA S.p.A., Via Medici 14, I-20052 Monza (IT)**

(72) Inventor: **Pigatto, Edro, Via Borgese, 4, Milano (IT)**

(74) Representative: **Caregaro, Silvio et al, c/o Società Italiana Brevetti S.p.A. Via Carducci 8, I-20123 Milano (IT)**

(54) Procedure for making an electric battery housing or casing, and battery housing or casing obtained thereby.

(57) A procedure for making an electric battery housing or casing, as well as the housing or casing provided thereby are described.

The procedure provides in general for injection molding formation of a bottom part of the housing and for extrusion forming a tubular member adapted to comprise said housing side-walls. Said bottom part and tubular member are rendered integral with each other by welding, and a closure lid will be applied by a known method to the assembly obtained thereby.

"PROCEDURE FOR MAKING AN ELECTRIC BATTERY HOUSING OR CASING, AND BATTEɼY HOUSING OR CASING OBTAINED THEREBY"

This invention relates tu a procedure for making an electric battery housinɟ or casing, as well as to the housing or casing provided thereby.

Originally the housings or casings for electric batteries or accumulators were made of ebonite. However, said housings were heavy, brittle and often prone to deformation, whereby the manufactures had to provide for multiple and expensive adjusting operations on said containers before they were ready for the market.

Presently the electric battery housings are made of polypropylene by a single injection molding operation by the use of special molds that have to be mounted on medium-large sized presses. It should be pointed out that in this disclosure the word battery housing or casing is intended to include the assembly comprised of the bottom wall and of the side walls to which a separately manufactured closure lid will be subsequently applied in a conventional manner. The housings provided by the above procedure are affected by many drawbacks, and the most apparent among them are pointed out hereinafter.

First of all, the housing do not have a perfectly parallelepipedal shape, but they are slightly flaring out from the bottom thereof, this being required by the necessary shakeout operation that has to be carried out upon completion of the molding operations. The above drawback is particularly remarkable upon formation of storage batteries, when a plurality of battery housings or casings are positioned close to each other and, at the end thereof opposite the bottom end, the groups so assembled will have a larger size compared to their bottom size.

A further drawback originates from the requirement that the housings must necessarily be manufactured with a fairly heavy wall thickness (usually about 4 mm), to avoid possible occurrence of transverse oscillations of the mold punch which should instead be always true to the bottom die of the mold. The considerable side-wall thickness of the casing is a factor in providing, by said side-walls themselves, a means for guiding and positioning the punch so that the manufacture of rejects (mainly because of the non-uniform casing wall thickness) is avoided.

A further drawback originating directly from the one just mentioned, is due to the considerable cost of the raw material used, i.e. the plastic material, just because of the large thickness of the housing walls.

An additional drawback resides in the high number of molds required in the manufacture of the housings, said number depending upon the different types of casings that are scheduled to be made, for instance relating to their height. In fact, a precisely proportioned mold will be needed for each height required.

A still further drawback originates from the fact that the molding operation must necessarily be performed by the use of medium-heavy sized presses requiring a high hourly operating cost, which cost always goes to add on to the final cost of the manufactured product.

Another drawback comes from the fact that the manufacturing cycle has to be interrupted in order to allow for replacement of the mold when it is desired to change from a certain type of casing to another having a different configuration and height.

It has now been contrived, and it is the object of this invention, an electric battery housing or casing manufacturing procedure that enables all of the above-mentioned drawbacks to be done away with. As a consequence, the housings or casing obtained by using said procedure will be free from drawbacks and faults of conventional casings.

According to the procedure of this invention, there is separately provided on the one hand a bottom part of the casing, obtained by injection molding and, on the other hand, a substantially tubular member or body that is obtained by an extrusion process. Next, the casing is assembled by connecting the bottom part to one of the tubular member ends, whereat the bottom part is secured, for instance by welding. As described hereinabove, the product obtained in this way comprises the battery casing lacking the sealing lid, the latter being applied thereafter in any known way, to complete the casing.

The features as well as the advantages of the procedure according to this invention will become apparent from the following detailed description of a non limiting embodiment thereof, made with reference to the attached drawings where some of the embodiments of the casings manufactured according to the subject procedure are shown, and in particular:

Figure 1 shows a perspective view of a casing according to this invention, before a bottom part is applied to the tubular member;

Figure 2 is a view of the same casing with the bottom part secured to the tubular member;

Figure 3 is a view of the bottom part according to section line III-III of Figure 1;

Figure 4 is a view of the casing along section line IV-IV of Figure 2;

Figure 5 is a perspective view of a modified embodiment of the container according to this invention, before a bottom part is applied to the tube member;

Figure 6 is a view of the casing with the bottom part thereof connected to the tubular member;

Figure 7 is a perspective view of another embodiment of the casing according to this invention, before a bottom part is applied to the tubular member;

Figure 8 shows another embodiment of the casing according to this invention before the bottom part thereof is applied to the tubular member;

Figure 9 shows a further embodiment of the container according to this invention, before the bottom part has been applied to the tubular member.

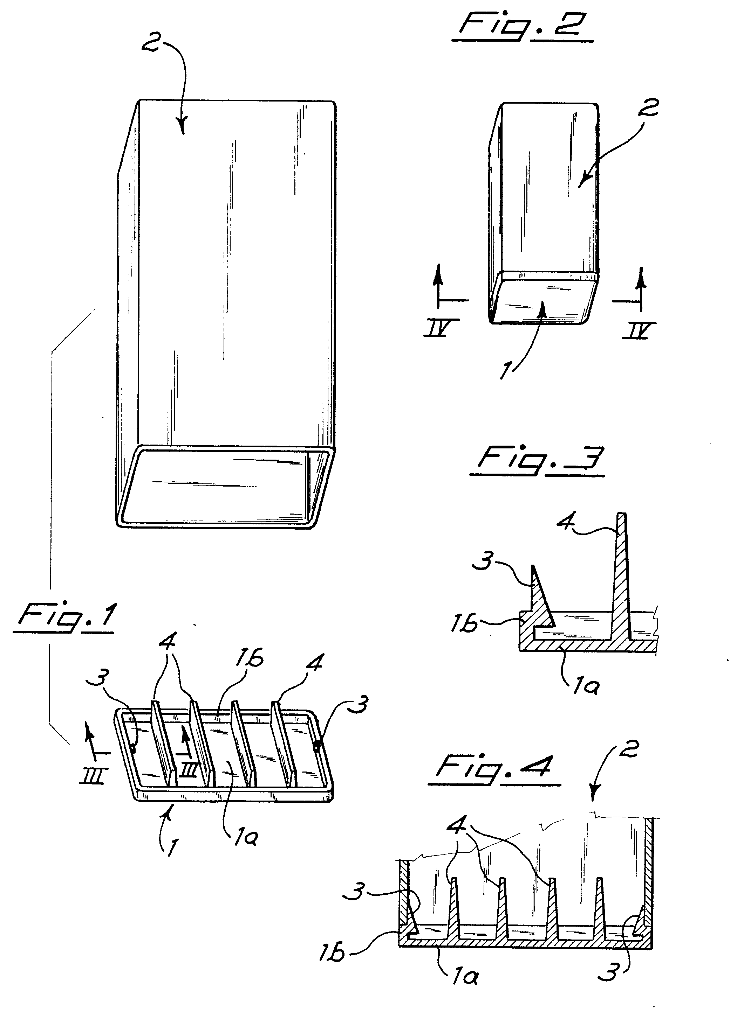

Referring now first of all to Figs. 1 to 4 in particular, the procedure according to this invention provides on the one hand for the preparation of a bottom part indicated generally at 1, and, on the other hand, for the preparation of a substantially tubular member indicated generally at 2. Bottom part 1 comprises a substantially rectangular plate 1a, whose peripheral edge 1b is bent at 90° with respect to the plate 1a. Tubular member 2 has a substantially parallelepipedal configuration.

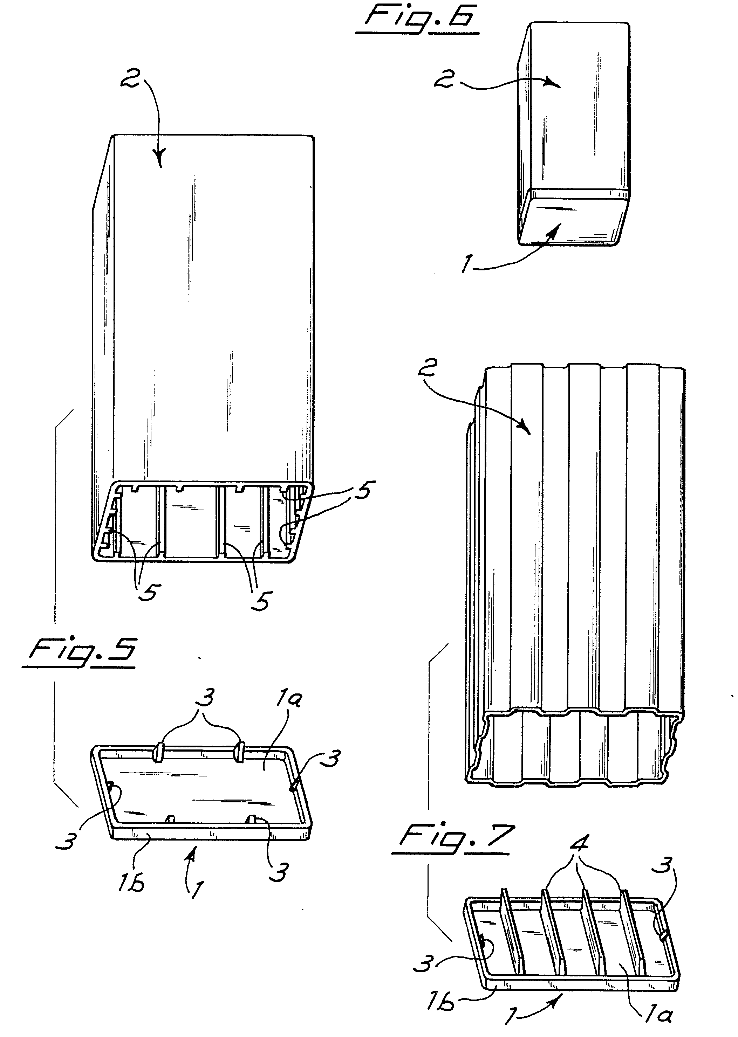

Bottom part 1, which is obtained by an injection molding operation, is adapted to be connected and made integral with one of the ends of tubular member 2 and, to that end, its periphery will have the same size as the end of tubular member 2. In order to ease the connection between bottom part 1 and tubular member 2, small teeth 3 are provided on bottom part 1 upon molding thereof, having a substantially prismatic shape, better shown in Figs. 3 and 4. In the exemplary embodiment of Fig. 1, two small teeth are provided, one at each shorter side of bottom part 1, and they project relative to the contour of peripheral edge 1b of bottom part 1, so that the latter is guided while being connected to tubular member 2.

Tubular member 2 is manufactured by an extrusion process and the length thereof can be suitably proportioned. It can already be, for example, the final length desired for the battery casing, and in this case the tubular member 2 will not be subjected to any further machining operation, besides the one needed to secure bottom part 1, otherwise its length can take any value in which case the member itself willbe stored separate from bottom part 1, and it will be cut therafter to a desired length, when that is needed.

The connecting and securing operation between the bottom part 1 and the tubular member 2 is preferably carried out by welding, and the welding operation can be any known type, for instance heat welding, whereupon the finished casing will show as illustated in Fig. 2. At the open end of tubular member 2, any known battery housing or casing closure lid will be applied in a known way.

As it can be noted in particular from Figs. 1, 3 and 4, the bottom part 1 is formed, on the inner side thereof, with transverse ribs 4 having a substantially prismatic shape, being directly provided during the molding step of bottom part 1. Said ribs 4 are adapted to perform, in a known way, as the positive and negative battery plates support members.

Referring now to Figs. 5 and 6, the casing according to this invention is described in an embodiment different from that described above. Said modification departs from the first embodiment essentially because the tubular member 2 is equipped with internal longitudinal ribs 5 providing stiffening elements for tubular member 2. In fact, taking advantage of the extrusion process, the wall thickness of the latter can be made particularly thin, therefore the presence of ribs 5 will advantageously cooperate to stiffen the aforesaid walls. The fact that the latter are of reduced thickness makes then possible to use a larger availability of acid in the electric battery, and to have easier cooling, compared to conventional casings.

Further differences between this embodiment and the preceding one reside in that in the present case the support ribs 4 for the battery plates are not provided, provision being made instead for six small teeth 3 for the connection between bottom part 1 and tubular member 2.

In the modified embodiment shown in Fig. 7, bottom part 1 is the same as in Fig. 1, therefore it will not be described. Tubular member 2, instead of having flat walls as in the preceding embodiments, is provided with fretted walls whose function is, on the one hand, to increase the section modulus of the wall itself, and, on the other hand, to improve the heat transfer coefficient for the evacuation of heat generated inside the battery, in operation.

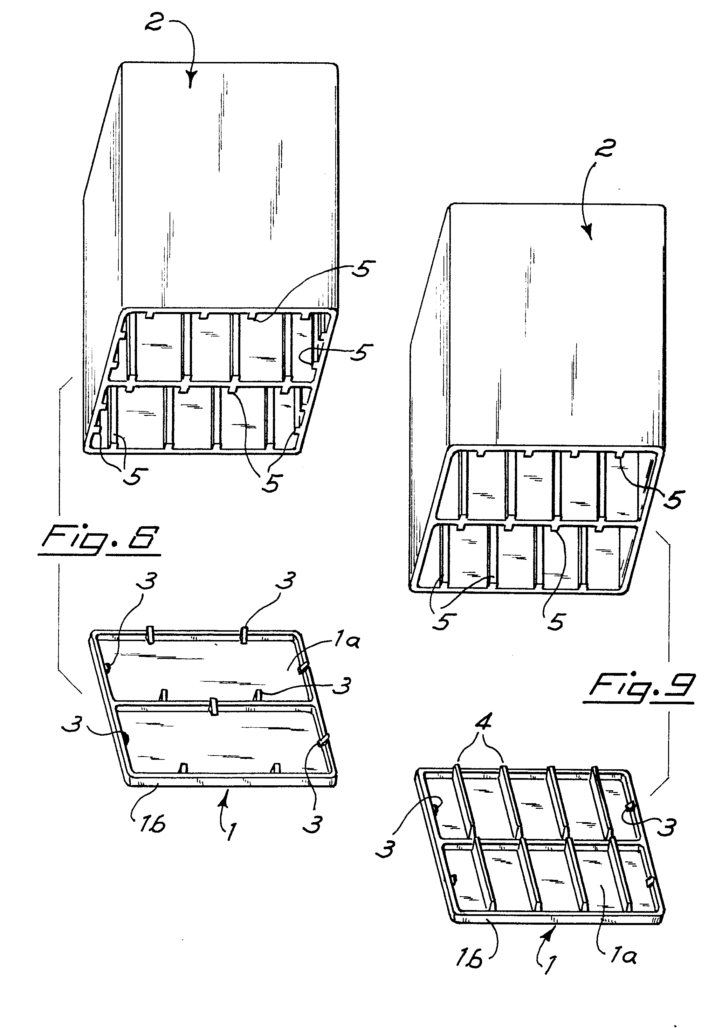

The embodiment illustrated in Fig. 8 is a casing for a double cell battery. It should be noted, in fact, that said modified embodiment can be considered as derived from the one of Figure 5, the latter providing then a "module" adapted to be repeated any number of times for multiple cell batteries.

The embodiment of Fig. 9 can be considered as derived from the one of Fig. 1. In fact, in this modified embodiment as well, the casing is for a double cell battery and both the bottom part 1 and the tubular member2 can be considered as derived by simply doubling those shown in Fig. 1. In this case tubular member 2 is equipped with longitudinal ribs 5 that were not provided in the case according to Fig. 1.

There are many advantages associated with the procedure according to this invention, and the most important among them are mentioned hereinafter.

The casing has a perfectly parallelepipedal configuration and, accordingly, when storage batteries are assembled by positioning a plurality of casings close to each other, there is always obtained an assembly whose cross-section has a rectangular shape and therefore it can be easily accomodated into the electric battery containment devices.

Furthermore, there is accomplished a noticeable reduction in the casing manufacturing equipment, concerning in particular the elimination of all the multiple molds presently required, since they are replaced by an extrusion die for manufacturing the tubular member, and by a single mold for manufacturing the bottom part.

A cost reduction of the casing is furthermore attained since a smaller amount of raw material is used owing to the possibility to extrude thinner wall thickness compared to what is presently the case.

The manufacturing times are furthermore drastically reduced, and the opportunity is made available for obtaining different height containers in an extremely simple way, without interrupting the manufacturing cycles, as it is presently done, due to the need to replace the mold. In fact, it is enough that the cutting assembly associated with the extrusion die be activated when needed to cut the tubular element at the desired height.

It should eventually be readily understood that variations and modifications can be made to the procedure and casing of this invention, without exceeding the scope of protection of the same invention.

## CLAIMS

1. Procedure for making a single or multiple cell electric battery casing characterized in that, on the one hand, a bottom part 1 of the casing is obtained by an injection molding operation and, on the other hand, there is obtained a substantially tubular member 2 made by an extrusion operation, and said bottom part 1 is secured to one of the ends of said tubular member 2.

2. Procedure according to claim 1, characterized in that the fastening of bottom part 1 to tubular member 2 is made by welding.

3. Single or multiple cell electric battery casing characterized in that it is comprised of a bottom part 1 which is fastened to one end of a substantially tubular member 2.

4. Casing according to claim 3, characterized in that the bottom part 1 is welded to tubular member 2.

5. Casing according to claim 3, characterized in tha the bottom part 1 is provided, on a peripheral edge 1b thereof, with a plurality of small teeth 3, for proper positioning thereof relative to tubular member 2.

6. Casing according to claim 3, characterized in that tubular member 2 has a substantially parallelepipedal shape.

7. Casing according to claim 3, characterized in that tubular member 2 is of a substantially parallelepipedal shape, having fretted walls.

8. Procedure for making a single or multiple cell electric battery casing, substantially as described hereinabove and shown in the attached drawings.

9. Single or multiple cell electric battery casing substantially as hereinabove described and shown in the attached drawings.

*Fig.2*

*Fig.3*

*Fig.1*

*Fig.4*

0169179

*Fig.6*

2

1

*Fig.5*

2

5

5

5

5

3

1a

3

3

3

1b

1

2

*Fig.7*

4

3

3

1b

1

1a

_Fig.6_

_Fig.9_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 460 663 (R.J. STUTZBACH et al.) <br> * Figures 2,5; column 1, line 46 - column 2, line 19; column 4, line 11 - column 5, line 17 * | 1-6,8, 9 | H 01 M 2/02 |
| X | GB-A-1 378 655 (J. LUCAS) <br><br> * Page 1, lines 53-77; page 2, lines 4-10; figure 1 * | 1-4,6, 8,9 | |
| Y | | 5,7 | |
| Y | FR-A-2 007 909 (GOULD-NATIONAL BATTERIES) <br> * Figures 2,3; page 4, lines 18-39 * | 5 | |
| Y | DE-A-1 596 186 (NIRONA-WERKE NIER & EHMER) <br> * Figure 1; claim 1; page 4, lines 20-24 * | 5 | **TECHNICAL FIELDS SEARCHED (Int. Cl.4)** <br><br> H 01 M |
| Y | FR-A-1 448 994 (SOC. DE L'ACCUMULATEUR FULMEN) <br> * Figures; claims 2,3,4,6; page 1, left-hand column, line 25 - right-hand column, line 7 * | 7 | |

The present search report has been drawn up for all claims

| Place of search | Date of completion of the search | Examiner |
|---|---|---|
| THE HAGUE | 20-09-1985 | D'HONDT J.W. |